# EUROPÄISCHE PATENTSCHRIFT

(11) **EP 2 833 166 B1**
(45) Veröffentlichungstag und Bekanntmachung des Hinweises auf die Patenterteilung: **31.01.2018**
(21) Anmeldenummer: 14175959.7
(22) Anmeldetag: 07.07.2014
(51) Int. Cl.: G02B 1/02, G02B 1/08, G02B 5/30

(54) **Fresnelsches Parallelepiped**
Fresnel parallelepiped
Parallélépipède de Fresnel

(30) Priorität: 02.08.2013 DE 102013108321
(43) Veröffentlichungstag der Anmeldung: 04.02.2015
(73) Patentinhaber: Leibniz - Institut für Analytische Wissenschaften - ISAS - e.V., 44139 Dortmund (DE)
(72) Erfinder: Speiser, Eugen, 10245 Berlin (DE); Neumann, Maciej, 12055 Berlin (DE)
(74) Vertreter: Weisse, Renate

(56) Entgegenhaltungen:
- DE-A1- 10 210 782
- US-A1- 2003 012 724
- US-A1- 2011 188 040
- BURNETT J H ET AL: "Symmetry of spatial-dispersion-induced birefringence and its implicatons for CaF2 ultraviolet optics", JOURNAL OF MICROLITHOGRAPHY, MICROFABRICATION AND MICROSYSTEMS, SOCIETY OF PHOTO-OPTICAL INSTRUMENTATION ENGINEERS, BELLINGHAM, US, Bd. 1, 1. Oktober 2002 (2002-10-01), Seiten 213-224, XP002261593, ISSN: 1537-1646, DOI: 10.1117/1.1503350

## Beschreibung

### Technisches Gebiet

Die Erfindung betrifft ein Fresnelsches Parallelepiped. Ein Fresnelsches Parallelepiped ermöglicht es, linear polarisiertes Licht durch zweifache Totalreflexion in zirkular polarisiertes Licht umzuwandeln.

Ein Fresnelsches Parallelepiped, auch Fresnelsche Rhombe genannt, ist ein lichtdurchlässiger Körper, beispielsweise aus Glas, dessen Querschnitt ein Parallelogramm ist. Der spitze Winkel des Parallelogramms ist so ausgewählt, dass linear polarisiertes Licht, das senkrecht auf eine der Stirnflächen trifft, zweimal unter diesem Winkel totalreflektiert wird. Die Auswahl des Winkels richtet sich nach dem Brechungsindex des für den Körper verwendeten Materials bei einer ausgewählten Wellenlänge. Bei Kronglas (mit der Brechzahl n=1,5) beispielsweise beträgt dieser Winkel 54°37'. Das zweifach totalreflektierte Licht verlässt den Körper wieder senkrecht auf der gegenüberliegenden Stirnfläche. Dabei ist der Strahl versetzt.

Wenn die Schwingungsebene des einfallenden, linear polarisierten Lichts mit der Reflexionsebene im Parallelepiped einen Winkel von 45° bildet wird zirkular polarisiertes Licht erzeugt. Bei jeder Totalreflexion wird eine Phasendifferenz δ=π/4, also insgesamt δ=π/2 zwischen der senkrecht zur Reflexionsebene polarisierten TE- und der parallel zur Reflexionsebene polarisierten TM-Komponente erzeugt. Die Verwendung von zwei geeigneten Fresnelschen Parallelepipeden führt wiederum zu linear polarisiertem Licht ohne Strahlversatz.

Die mit einem Fresnelschen Parallelepiped erzeugte Phasendifferenz zeigt in weiten Bereichen nur eine geringe Abhängigkeit von der Wellenlänge. Entsprechend wird es bei Anwendungen eingesetzt, bei denen eine möglichst geringe Wellenlängenabhängigkeit erforderlich ist.

### Stand der Technik

Auf der Internetseite http://www.wmi.badw.de/teaching/Lecturenotes/Physik3/ Gross_Physik_III_Kap_3.pdf werden Fresnelsche Parallelepipede und deren Aufbau und Wirkungsweise beschrieben.

Verwendet werden bei bekannten Anordnungen ein oder zwei Fresnelsche Parallelepipede um üblicherweise Gesamtverzögerungen von 45° bzw. 90° zu erzielen.

Unter der Internetadresse http://www.halbo.com/fr_rhmb.htm werden Fresnelsche Parallelepipede angeboten. Dabei wird der Verlauf der Phasenverzögerung u.a. für CaF₂ über die Wellenlänge dargestellt. Die Phasenverzögerung vergrößert sich mit abnehmender Wellenlänge. Bei bekannten Anordnungen wurde davon ausgegangen, dass CaF₂ keine doppelbrechenden Eigenschaften aufweist.

In der Veröffentlichung "Intrinsic birefringence in calcium fluoride and barium fluoride" in Physical Review B. Vol. 64, S. 241102 (R) vom 29.November 2001 von John H. Burnett, Zachary H. Levine und Eric L. Shirley wird beschrieben, dass in Wellenlängenbereichen unterhalb von 250 nm eine geringe Doppelbrechung in CaF₂ und BaF₂ auftritt. Dabei wurde eine Richtungsabhängigkeit der Doppelbrechung festgestellt.

Die Veröffentlichung "Symmetry of spatial-dispersion-induced birefringence and its implications for CaF2 ultraviolet optics von J.H.Burnett, Z.H.Levine, E.L.Shirley und J.H.Bruning in Micro/Nanolith. MEMS MOEMS. 1(3) Seiten 213-224 (Okt. 2002) befasst sich mit weiteren theoretischen Grundlagen der intrinsischen Doppelbrechung von CaF₂.

US 2003/0012724 A1 offenbart eine Zusammensetzung aus Ca, Ba und Sr-Fluoriden, die wenig oder keine Doppelbrechung bei einer ausgewählten Wellenlänge zeigt. US 2011/0188040 offenbart eine Anordnung zur Erzeugung einer Phasenverzögerung mit einem im Wesentlichen achromatischen Verzögerungssystem für den Bereich zwischen 190 und 1700 nm.

Die geringfügige Doppelbrechung darf bei kurzwelligem Licht und langen optischen Wegen, wie sie in Fresnelschen Parallelepipeden auftreten, nicht vernachlässigt werden. Kommerziell verfügbare, Fresnelsche Parallelepipede sind daher für die Verwendung mit kurzwelligem Licht unterhalb von 250 nm nicht oder nur schlecht verwendbar.

### Offenbarung der Erfindung

Es ist Aufgabe der Erfindung, ein Fresnelsches Parallelepiped der eingangs genannten Art zu schaffen, das über weite Wellenlängenbereiche, auch mit Licht unterhalb von 250 nm verwendet werden kann.

Erfindungsgemäß wird die Aufgabe durch ein Fresnelsches Parallelepiped mit den Merkmalen des Anspruchs 1 gelöst. Dabei wird die Orientierung der Kristallstruktur bei der Herstellung und Ausrichtung der eingangsseitigen Stirnseite berücksichtigt. Der auf das Fresnelsche Parallelepiped einfallende Strahl bildet zur Erreichung des gewünschten Effekts immer einen vorgegebenen Winkel von 90° mit der Stirnseite. Wenn die Orientierung der Kristallstruktur bei der Herstellung und Ausrichtung der Stirnseite berücksichtigt wird, folgt der Lichtstrahl einer vorgegebenen Richtung durch den Kristall. Auf diese Weise können nicht-isotrope Eigenschaften des Materials für die Verwendung berücksichtigt und genutzt werden. Eine dieser nicht-isotropen Eigenschaften des Materials ist beispielsweise die richtungsabhängige Doppelbrechung bei der Verwendung von CaF₂, BaF₂ und ähnlichen Materialien.

Insbesondere bei kurzen Wellenlängen treten in einigen Materialien, etwa CaF₂ oder BaF₂ im Fresnelschen Parallelepiped verschiedene phasenbeeinflussende Effekte auf. Der Lichtstrahl durchläuft in einer ersten Richtung senkrecht zur Stirnfläche eine erste Teilstrecke. Dabei tritt aufgrund der Doppelbrechung eine erste Phasenverzögerung auf, die von der Richtung und der Weglänge abhängt. Bei der Totalreflexion erfolgt eine weitere Phasenverzögerung. Nach der Totalreflexion durchläuft der Lichtstrahl in einer zweiten Richtung eine zweite Teilstrecke. Dabei tritt aufgrund der Doppelbrechung eine dritte Phasenverzögerung auf, die ebenfalls von der Richtung und der Weglänge in dieser zweiten Richtung abhängt. Die zweite Totalreflexion bewirkt erneut eine Phasenverzögerung. Nach der zweiten Totalreflexion durchläuft der Lichtstrahl eine dritte Teilstrecke wieder in der ersten Richtung. Die gesamte durchlaufene Weglänge in der ersten Richtung entspricht also der Summe aus der ersten und dritten Teilstrecke. Die Weglänge in der zweiten Richtung entspricht der zweiten Teilstrecke.

In vielen Materialien nehmen die Verzögerungswerte bei der Doppelbrechung in einigen Richtungen positive und in anderen Richtungen negative Werte an. Mit anderen Worten: die parallel polarisierte Komponente des Lichts ist in einigen Richtungen schneller und in anderen Richtungen langsamer als die dazu senkrecht polarisierte Komponente. Es ist daher bei einer bevorzugten Ausgestaltung der Erfindung vorgesehen, dass die Doppelbrechung in der ersten Laufrichtung des Lichts, die Doppelbrechung in der zweiten Laufrichtung des Lichts und die durch Totalreflexionen erzeugten Verzögerungen auf einen ausgewählten Verzögerungswert optimiert wird.

Eine solche Optimierung kann insbesondere durch Minimierung der Abweichung von einer zu erzielenden Gesamtverzögerung über alle Wellenlängen eines ausgewählten Wellenlängenbereichs erfolgen.

Vorzugsweise besteht das erfindungsgemäße Parallelepiped aus CaF₂ oder BaF₂. Das Material ist auch im kurzwelligen Wellenlängenbereich unterhalb von 250 nm transparent und für die Verwendung bei Ellipsometrie und anderen Messaufgaben, die eine Polarisationskontrolle benötigen, gut geeignet.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: zeigt einen Querschnitt durch ein typisches Fresnelsches Parallelepiped und den zugehörigen Strahlengang.
- Fig.2: illustriert typische Bezeichnungen und die geometrischen Verhältnisse in einer Kristallstruktur.
- Fig.3: zeigt die Wellenlängenabhängigkeit der Phasenverzögerung aus dem Experiment für bekannte Anordnungen und theoretische Werte für Anordnungen, bei denen die Ausrichtung der Stirnfläche optimiert wurde.
- Fig.4: illustriert die Abhängigkeit der Verzögerung pro mm Material von der Strahlrichtung, wobei zwei Richtungen mit festem Abstand markiert sind, bei denen sich die Phasenverzögerungen über die gesamte optische Wegstrecke in dem Fresnelschen Parallelepiped gerade kompensieren.
- Fig.5: ist ein Querschnitt durch zwei hintereinander angeordnete, Fresnelsche Parallelepipede.

### Beschreibung des Ausführungsbeispiels

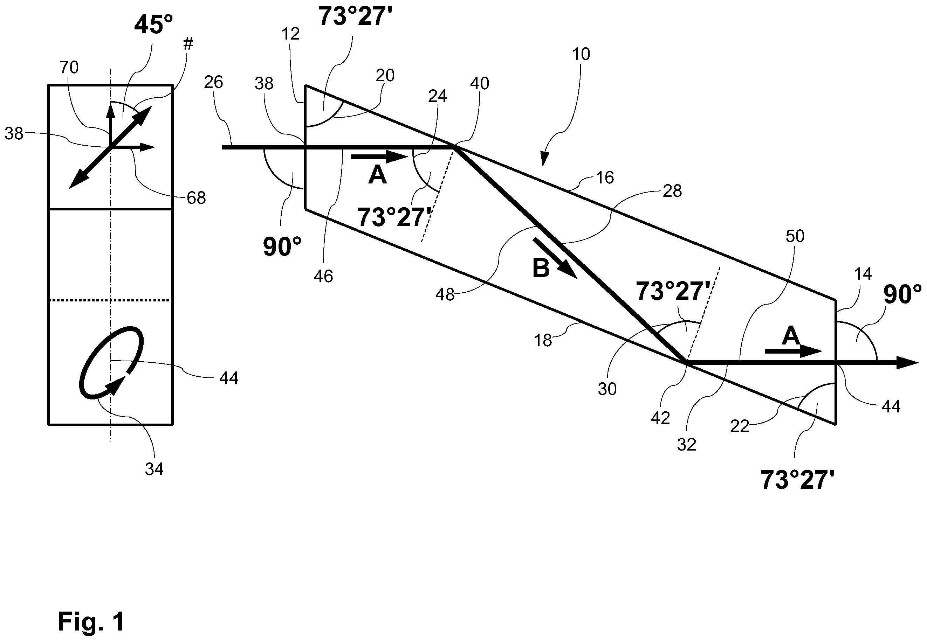

In Figur 1 ist ein typisches Fresnelsches Parallelepiped dargestellt, das allgemein mit 10 bezeichnet ist. Im vorliegenden Ausführungsbeispiel besteht das Material aus einem Kalziumfluorid (CaF₂)-Kristall. Es versteht sich, dass die Auswahl des Materials von der Messaufgabe und dem verwendeten Wellenlängenbereich abhängt und bei anderen Ausführungsbeispielen auch andere Materialien mit entsprechenden Eigenschaften verwendet werden können.

Das Parallelepiped 10 ist in Figur 1 im Querschnitt dargestellt, der über die gesamte Breite gleich ist. Das Parallelepiped 10 weist eine eingangsseitige Stirnfläche 12 und eine ausgangsseitige Stirnfläche 14 auf. Die Stirnflächen 12 und 14 sind parallel. Zwischen den Stirnflächen befindet sich das Material, welches von 4 paarweise parallelen Seitenflächen begrenzt ist. Zwei der Seitenflächen, nämlich die Seitenflächen 16 und 18, verlaufen senkrecht zur Darstellungsebene. Die Seitenflächen parallel zur Darstellungsebene sind naturgemäß nicht in dieser Darstellung erkennbar. Die Stirnflächen 12 und 14 bilden mit den parallelen Seitenflächen 16 und 18 jeweils einen spitzen Winkel 20 bzw. 22 von ϕ=73°27'. Auf diese Weise wird ein Parallelogramm in der dargestellten Weise aufgespannt.

Ein Strahl 26, der senkrecht auf die Stirnfläche 12 einfällt, trifft bei dieser Geometrie unter dem Winkel 24 auf die Seitenfläche 16, der dem Winkel ϕ entspricht. Bei dem gewählten Material wird der Strahl totalreflektiert. Der totalreflektierte Strahl 28 trifft unter dem Winkel 30 auf die Seitenfläche 18. Da die Flächen 16 und 18 parallel sind, entspricht auch der Winkel 30 dem Winkel ϕ. Dort wird der Strahl erneut totalreflektiert. Der zweifach totalreflektierte Strahl 32 verlässt das Parallelepiped unter einem Winkel von 90° an der ausgangsseitigen Stirnfläche 14.

Bei jeder Totalreflexion an den Stirnseiten 16 und 18 erfolgt eine polarisationsabhängige Verzögerung. Dieser Effekt ist bekannt und ergibt sich aus den Fresnelschen Gleichungen. Wenn das einfallende Licht, d.h. der Strahl 26, mit einem Winkel von 45° linear polarisiert ist, verzögert sich die parallel zur Reflexionsebene polarisierten TM-Komponente gegenüber der senkrecht polarisierten TE-Komponente bei jeder Totalreflexion um 22,5°. Bei der gezeigten Anordnung entsprechend um 45°. Wenn die Intensitäten der Komponenten des einfallenden Strahls 26 in beiden Polarisationsrichtungen gleich sind, ist auf diese Weise der austretende Strahl 32 elliptisch polarisiert. Dies ist durch eine Eliipse 34 angedeutet.

Bei den vorstehenden Ausführungen für ein Fresnelsches Parallelepiped wird von einem vollständig isotropen Material ausgegangen. Das ist aber insbesondere für kleine Wellenlängen unterhalb von 250 nm nicht der Fall. Die Richtungsabhängigkeit der Verzögerung insbesondere für kleine Wellenlängen führt dazu, dass der Polarisationszustände des Strahls auf andere Weise geändert wird, als oben angegeben.

Der Strahl 26 durchläuft in einem Fresnelschen Parallelepiped eine erste Wegstrecke 46 zwischen dem Eintrittspunkt 38 an der Stirnfläche 12 und dem Punkt 40 der ersten Totalreflexion in einer ersten Richtung, die mit "A" bezeichnet ist. Weiterhin durchläuft der Strahl 28 eine zweite Wegstrecke 48 zwischen dem Punkt 40 der ersten Totalreflexion und dem Punkt 42 der zweiten Totalreflexion in einer zweiten Richtung, die mit "B" bezeichnet ist. Schließlich durchläuft der Strahl 32 eine dritte Wegstrecke 50 zwischen dem Punkt 42 der zweiten Totalreflexion und dem Austrittspunkt 44 an der Stirnfläche 14 wiederum in der ersten Richtung, die mit "A" bezeichnet ist. Mit anderen Worten: die Verzögerung setzt sich zusammen aus den Verzögerungen, die entlang der Summe der Wegstrecken 46 und 50 in Richtung A erfolgen und der Verzögerung entlang der Wegstrecke 48 in Richtung B.

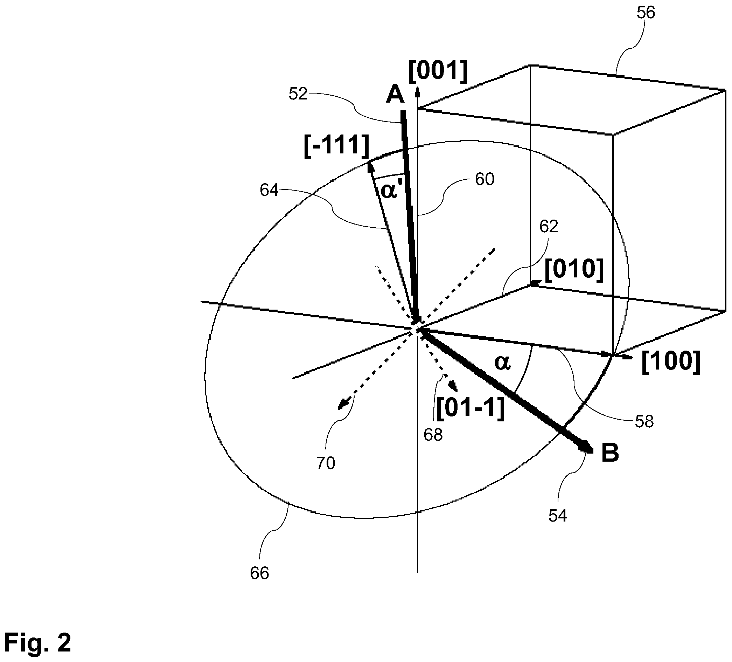

Figur 2 illustriert die geometrischen Verhältnisse der Strahlrichtungen relativ zur Kristallstruktur. Richtung A ist durch einen dick dargestellten Pfeil 52 dargestellt. Richtung B ist durch einen dick dargestellten Pfeil 54 dargestellt. Der Quader 56 repräsentiert eine Kristallstruktur. In üblicher Weise kann die Kristallstruktur durch Hauptrichtungen charakterisiert werden. Im vorliegenden Ausführungsbeispiel hat die Kristallstruktur Hauptrichtungen, die ein kartesisches Koordinatensystem bilden. Die Kristallrichtung [100] ist durch einen Pfeil 58 repräsentiert. Die Richtung [001] ist durch einen Pfeil 60 repräsentiert. Die Richtung [010] ist durch einen Pfeil 62 repräsentiert. Diese Richtungspfeile entsprechen den Richtungen der Kanten des Quaders 56. Die Richtung [-111] ist durch einen Pfeil 64 repräsentiert. Diese Richtung verläuft entlang der Diagonalen durch einen benachbarten Quader, der in der vorliegenden Darstellung aus Gründen der Übersichtlichkeit nicht eingezeichnet ist.

Die nicht-parallelen Strahlrichtungen A und B spannen eine Ebene auf. Die Ebene wurde so gewählt, dass die Richtungen [100] und [-111] ebenfalls in der Ebene liegen. Die Ebene ist durch den Kreis 66 repräsentiert. Die Strahlrichtung B bildet einen Winkel α mit der Hauptrichtung [100]. Die Strahlrichtung A bildet einen Winkel α' mit der Hauptrichtung [-111]. Bei dieser Konstellation hat das in das Parallelepiped eintretende Licht 26 eine senkrecht zur Reflexionsebene polarisierte TE-Komponente in Richtung [01'1] (gestrichelter Pfeil), die in Figur 2 mit 68 bezeichnet ist und eine parallel zur Reflexionsebene polarisierte TM-Komponente in die Richtung (gestrichelter Pfeil), die mit 70 bezeichnet ist.

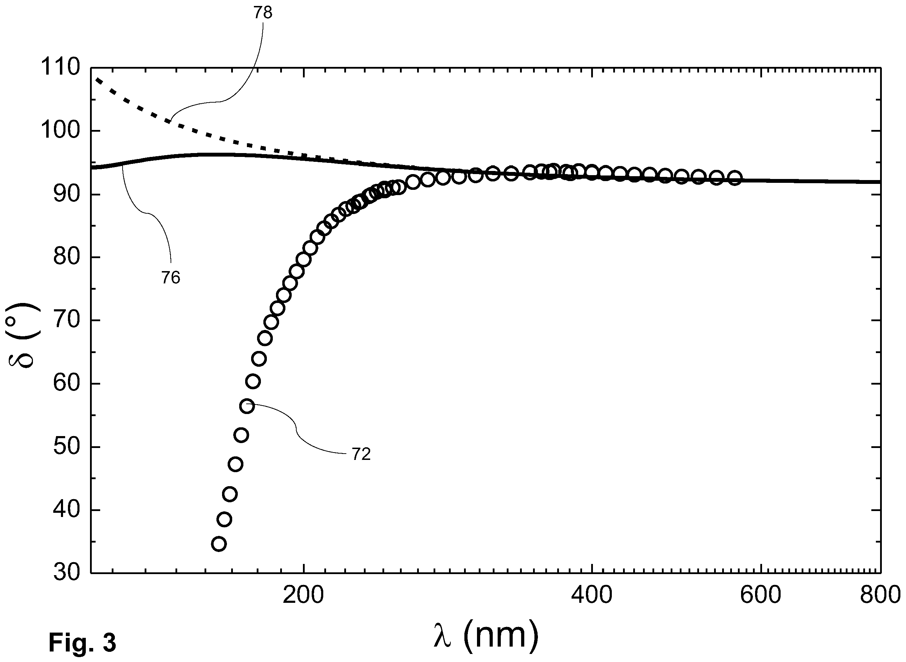

Zusätzlich zu der durch die Totalreflexion verursachten Verzögerung tritt eine schwache, richtungsabhängige Doppelbrechung in dem Kristall auf. Diese ist bei kleinen Wellenlängen besonders ausgeprägt und darf besonders bei Wellenlängen unterhalb von 250 nm nicht vernachlässigt werden. Figur 3 zeigt die experimentellen Ergebnisse der Messung der Phasenverzögerung δ an einem handelsüblichen Fresnelschen Doppel-Parallelepiped aus CaF₂-Kristall in Abhängigkeit von der Wellenlänge. Die Messpunkte sind mit 72 bezeichnet. Man erkennt, dass die Phasenverzögerung oberhalb von 250 nm im Bereich von 90° liegt, wie eingangs für ein einzelnes Fresnelsches Parallelepiped mit 45° Phasenverzögerung beschrieben. Unterhalb von 250 nm fällt die Phasenverzögerung δ stark ab und ist bei 170 nm bereits nur noch bei etwa 40°.

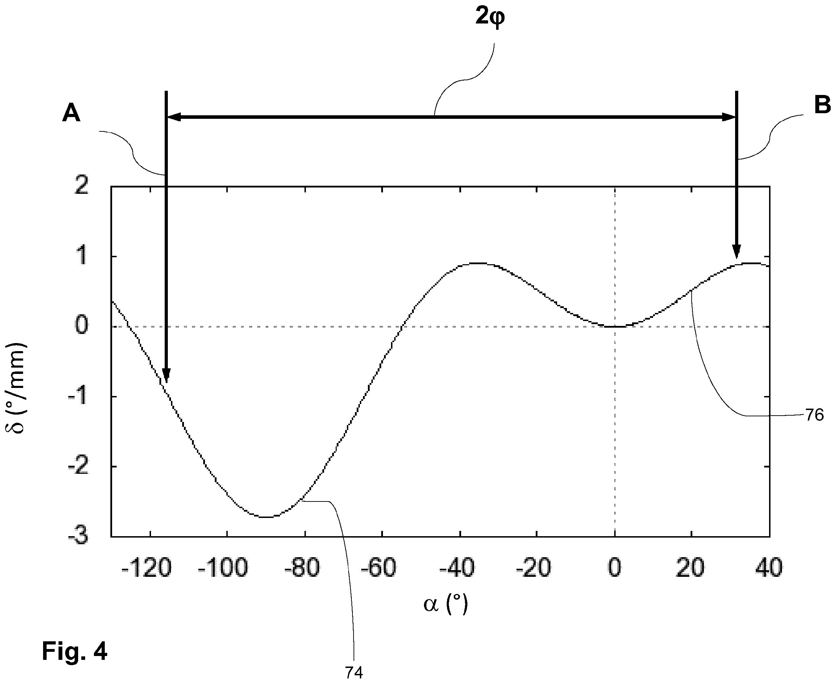

Der Effekt ist richtungsabhängig. Figur 4 zeigt die durch die richtungsabhängige Doppelbrechung hervorrufende Verzögerung δ pro mm Material in Richtung verschiedener Winkel α, d.h. in den verschiedenen Richtungen in der Ebene 66. Dabei entspricht α=0° der Hauptrichtung [100] aus Figur 2.
Negative Bereiche, beispielsweise der Bereich 74, sind Bereiche, in denen der Brechungsindex für die senkrecht polarisierte Komponente 68 kleiner ist als für die parallel polarisierte Komponente 70 und so eine negative Verzögerung verursacht. Im positiven Bereich, beispielsweise im Bereich 76, ist das umgekehrte der Fall. Der Brechungsindex für die senkrecht polarisierte Komponente 68 (Fig.2) ist größer als für die parallel polarisierte Komponente 70, so dass eine positive Verzögerung auftritt.
Im vorliegenden Beispiel liegt Richtung A bei etwa -115°. Man erkennt, dass Strahlung in Richtung A einer Verzögerung von δ≈-1°/mm unterliegt. Richtung B liegt, wie sich aus Figur 1 ergibt, um einen festen Winkel von 2*73°27' versetzt bei etwa 30°. Strahlung in Richtung B unterliegt einer Verzögerung von δ≈1°/mm. Der Winkelabstand 2*ϕ=2*73°27' zwischen Richtung A und Richtung B ist zur Erreichung der Eigenschaften von Fresnelschen Parallelepipeden durch das verwendete Material fest vorgegeben. Die Ausrichtung des Kristalls hingegen kann auf einen möglichst günstigen Wert eingestellt werden. Eine Änderung der Kristallausrichtung entspricht in Figur 4 einer Verschiebung der beiden Pfeile A und B bei gleichbleibendem Abstand.

Es kann eine Kristallausrichtung gefunden werden, bei der die Effekte der Doppelbrechung in Richtung A und der Doppelbrechung in Richtung B sich gerade kompensieren. Bei der in Figur 4 gezeigten Auswahl ist die Verzögerung in Richtung A negativ und in Richtung B positiv.. Das optimierte Ergebnis ist in Figur 3 mit 76 bezeichnet. Man erkennt, dass durch eine geeignete Ausrichtung des Kristalls, d.h. bei geeigneter Auswahl der Richtung der Stirnflächen 12 und 14 bezüglich der Kristallstruktur, die Wellenlängenabhängigkeit der Phasenverzögerung minimiert werden kann. Im vorliegenden Ausführungsbeispiel wurde die Phasenverzögerung über alle Wellenlängen auf einen Wert bei 90° optimiert.

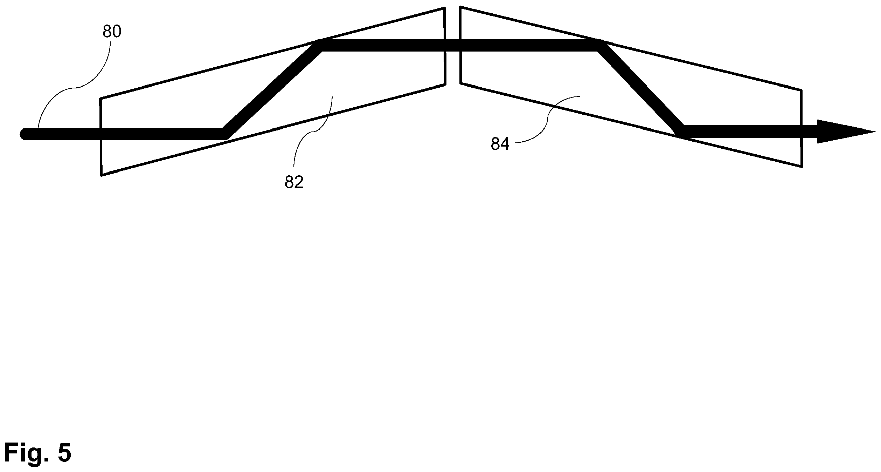

Je nach Anwendungsfall kann es sinnvoll sein, eine Phasenverzögerung ohne Strahlversatz zu erzeugen. Für diesen Anwendungsfall werden zwei Fresnelsche Parallelepipede hintereinander angeordnet. Figur 5 illustriert, wie ein Strahl 80 durch zwei hintereinander liegende Parallelepipede 82 und 84 läuft. Dabei wird die Richtung linear polarisierter Strahlung um 90° geändert und der Strahl behält seine Richtung.

## Patentansprüche

1. Fresnelsches Parallelepiped (10), aus einem Kristallmaterial, welches eine richtungsabhängige Doppelbrechung für Wellenlängen kleiner als 250 nm aufweist, derart ausgebildet, dass ein Lichtstrahl, der in einer ersten Strahlrichtung (A) senkrecht beim Eintrittspunkt (38) bei der eingangsseitigen Stirnfläche (12) einfällt, nach einer ersten Totalreflexion bis zu einer zweiten Totalreflexion in einer zweiten Strahlrichtung (B) weiterläuft und danach beim Austrittspunkt (44) senkrecht zur ausgangsseitigen Stirnfläche (14) in der ersten Strahlrichtung (A) austritt, eine Phasenverzögerung zwischen zueinander senkrecht polarisierten Lichtkomponenten erfährt, die über alle Wellenlängen auf einen Wert bei 90° optimiert ist, wobei der Kristall so ausgerichtet ist, dass sich zusätzliche Phasenverzögerungen zwischen zueinander senkrecht polarisierten Lichtkomponenten aufgrund der unterschiedlichen Effekte der richtungsabhängigen Doppelbrechung entlang der nicht-parallelen ersten und zweiten Strahlrichtungen (A, B) kompensieren.

2. Fresnelsches Parallelepiped nach Anspruch 1, **dadurch gekennzeichnet, dass** die Doppelbrechung in der ersten Strahlrichtung (A) des Lichtstrahls, die Doppelbrechung in der zweiten Strahlrichtung (B) des Lichtstrahls und die durch Totalreflexionen erzeugten Verzögerungen auf einen ausgewählten Verzögerungswert optimiert wird.

3. Fresnelsches Parallelepiped nach einem der vorgehenden Ansprüche, **dadurch gekennzeichnet, dass** die Optimierung durch Minimierung der Abweichung von einer zu erzielenden Gesamtverzögerung über alle Wellenlängen eines ausgewählten Wellenlängenbereichs erfolgt.

4. Fresnelsches Parallelepiped nach einem der vorgehenden Ansprüche, **dadurch gekennzeichnet, dass** es aus CaF₂ oder BaF₂ besteht.

5. Optische Messanordnung mit Polarisationskontrolle enthaltend ein Fresnelsches Parallelepiped nach einem der vorgehenden Ansprüche.

6. Verwendung eines Fresnelschen Parallelepipeds nach einem der Ansprüche 1 bis 4 bei Ellipsometrie mit Wellenlängen unterhalb von 250 nm.

7. Verfahren zur Herstellung eines Fresnelschen Parallelepipeds (10), aus einem Kristallmaterial, welches eine richtungsabhängige Doppelbrechung für Wellenlängen kleiner als 250 nm aufweist, derart ausgebildet, dass ein Lichtstrahl, der in einer ersten Strahlrichtung (A) senkrecht beim Eintrittspunkt (38) bei der eingangsseitigen Stirnfläche (12) einfällt, nach einer ersten Totalreflexion bis zu einer zweiten Totalreflexion in einer zweiten Strahlrichtung (B) weiterläuft und danach beim Austrittspunkt (44) senkrecht zur ausgangsseitigen Stirnfläche (14) in der ersten Strahlrichtung (A) austritt, eine Phasenverzögerung zwischen zueinander senkrecht polarisierten Lichtkomponenten erfährt, mit den Schritten:
(a) Auswählen eines Verzögerungswertes;
(b) Optimieren der Doppelbrechung in der ersten Strahlrichtung (A) des Lichtstrahls, der Doppelbrechung in der zweiten Strahlrichtung (B) des Lichtstrahls und der durch Totalreflexionen erzeugten Verzögerungen auf den ausgewählten Verzögerungswert.

## Claims

1. Fresnel rhomb (10) made of a crystal material which has a direction-dependent birefringence for wavelengths which are smaller than 250 nm, designed in such a way that a light beam which is perpendicularly incident in a first travelling direction (A) to the point of incidence (38) on the incident front end (12), propagates in a second travelling direction (B) after a first total reflection and then exits at an exit point (44) perpendicularly to the exit back end (14) in the first travelling direction (A), the light beam having a phase delay between perpendicularly polarized light components which is optimized to a value of 90° over all wavelengths wherein the crystal is directed in such a way that additional phase delays between perpendicularly polarized light components due to the different effects of the direction-dependent birefringence compensate each other along the non-parallel first and second travelling directions (A, B).

2. Fresnel rhomb according to claim 1, **characterized in that** the birefringence in the first travelling direction (A) of the light beam, the birefringence in the second travelling direction (B) of the light beam and delays caused by total reflection are optimised to a selected delay value.

3. Fresnel rhomb according to claim 2, **characterised in that** the optimization is effected by minimizing the deviation of the desired overall delay for all wavelengths of a selected wavelength range.

4. Fresnel rhomb according to any of the preceding claims, **characterised in that** it consists of CaF₂ or BaF₂.

5. Optical measuring assembly with polarization control comprising a Fresnel rhomb according to any of the preceding claims.

6. Use of a Fresnel rhomb according to any of claims 1 to 4 for ellipsometry with wavelengths shorter than 250 nm.

7. Method for the manufacturing of a Fresnel rhomb (10) made of a crystal material which has a direction-dependent birefringence for wavelengths which are smaller than 250 nm, designed in such a way that a light beam which is perpendicularly incident in a first travelling direction (A) to the point of incidence (38) on the incident front end (12), propagates in a second travelling direction (B) after a first total reflection and then exits at an exit point (44) perpendicularly to the exit back end (14) in the first travelling direction (A), the light beam having a phase delay between perpendicularly polarized light components, comprising the steps of
(a) selecting a delay value;
(b) optimising the birefringence in the first travelling direction (A) of the light beam, the birefringence in the second travelling direction (B) of the light beam and delays caused by total reflection to said selected delay value.

## Revendications

1. Parallélépipède de Fresnel (10) composé d'un matériau de cristal présentant une double réfraction dépendant du sens pour longueurs d'onde inférieures à 250 nm, configuré de sorte qu'un rayon de lumière incident dans un premier sens d'incidence (A) perpendiculairement au point d'incidence (38) sur la surface frontale située côté entrée (12), continue, dans un second sens d'incidence (B), après une première réflexion totale jusqu'à une seconde réflexion totale pour ensuite sortir, dans le premier sens d'incidence (A), par le point de sortie (44) perpendiculairement à la surface frontale située côté sortie (14), subit un déphasage entre des composants de lumière polarisés perpendiculairement les uns aux autres, lequel déphasage est optimisé sur toutes les longueurs d'onde de sorte à atteindre une valeur de 90°, le cristal étant orienté de sorte que des déphasages supplémentaires entre des composants de lumière polarisés perpendiculairement les uns aux autres se compensent en raison des effets différents de la double réfraction dépendant du sens le long des premier et second sens d'incidence (A, B) non-parallèles.

2. Parallélépipède de Fresnel selon la revendication 1, **caractérisé en ce que** la double réfraction est optimisée dans le premier sens d'incidence (A) du rayon de lumière, la double réfraction dans le second sens d'incidence (B) du rayon de lumière et les déphasages générés par des réflexions totales sont optimisés de sorte à atteindre une valeur de déphasage choisie.

3. Parallélépipède de Fresnel selon l'une quelconque des revendications précédentes, **caractérisé en ce que** l'optimisation s'effectue en minimisant l'écart d'un déphasage total à atteindre sur toutes les longueurs d'onde d'une plage de longueur d'onde choisie.

4. Parallélépipède de Fresnel selon l'une quelconque des revendications précédentes, **caractérisé en ce qu'**il se compose de CaF₂ ou BaF₂.

5. Disposition de mesure optique à contrôle de la polarisation comprenant un parallélépipède de Fresnel selon l'une quelconque des revendications précédentes.

6. Utilisation d'un parallélépipède de Fresnel selon l'une quelconque des revendications 1 à 4 par ellipsométrie à l'aide de longueurs d'onde inférieures à 250 nm.

7. Procédé destiné à la fabrication d'un parallélépipède de Fresnel (10) à partir d'un matériau de cristal présentant une double réfraction dépendant du sens pour longueurs d'onde inférieures à 250 nm, configuré de sorte qu'un rayon de lumière incident dans un premier sens d'incidence (A) perpendiculairement au point d'incidence (38) sur la surface frontale située côté entrée (12) continue, dans un second sens d'incidence (B), après une première réflexion totale jusqu'à une seconde réflexion totale pour ensuite sortir, dans le premier sens d'incidence (A), par le point de sortie (44) perpendiculairement à la surface frontale située côté sortie (14), subit un déphasage entre des composants de lumière polarisés perpendiculairement les uns aux autres, comprenant les étapes de :
(a) choix d'une valeur de déphasage ;
(b) optimisation de la double réfraction dans le premier sens d'incidence (A) du rayon de lumière, de la double réfraction dans le second sens d'incidence (B) du rayon de lumière et des déphasages générés par des réflexions totales de sorte à atteindre la valeur de déphasage choisie.
